# EUROPÄISCHE PATENTSCHRIFT

(11) **EP 3 102 022 B1**
(45) Veröffentlichungstag und Bekanntmachung des Hinweises auf die Patenterteilung: **16.05.2018**
(21) Anmeldenummer: 14703539.8
(22) Anmeldetag: 06.02.2014
(51) Int. Cl.: A01G 31/02

(54) **VORRICHTUNG ZUR AUFZUCHT EINER ODER MEHRERER PFLANZEN**
DEVICE FOR GROWING ONE OR MORE PLANTS
DISPOSITIF SERVANT À LA CULTURE D'UNE OU DE PLUSIEURS PLANTES

(43) Veröffentlichungstag der Anmeldung: 14.12.2016
(73) Patentinhaber: Horticoop B.V., 2665 LP Bleiswijk (NL); Daas, Kamal, 44915 Tira Triengle (IL); Daas, Talal, 60565 Naperville, Illinois (US)
(72) Erfinder: DAAS, Kamal, 44915 (IL)
(74) Vertreter: Herrmann, Uwe
(86) Internationale Anmeldenummer: PCT/EP2014/000326
(87) Internationale Veröffentlichungsnummer: WO 2015/117623

(56) Entgegenhaltungen:
- WO-A1-2012/034575
- DE-A1-102010 050 367
- DE-U1-202011 002 791
- DE-U1-202011 004 908

## Beschreibung

Die Erfindung betrifft eine Vorrichtung zur Aufzucht einer oder mehrerer Pflanzen, wobei die die Vorrichtung wenigstens eine erste und wenigstens eine zweite Kammer aufweist, die durch eine erste Trennwand voneinander abgetrennt sind, wobei die Innenräume der ersten und der zweiten Kammer durch eine oder mehrere Wandungen begrenzt sind und durch eine oder mehrere Verbindungsöffnungen in der ersten Trennwand verbunden sind, und wobei die zweite Kammer eine oder mehrere Ausgangsöffnungen aufweist, die an einer zweiten Trennwand angeordnet sind.

Eine derartige Vorrichtung ist aus der WO 2012/034575 A1 bekannt.

Ein Ziel der Erfindung ist es, eine Vorrichtung bereitzustellen, welche eine vereinfachte Handhabung und insbesondere einen vereinfachten Erntevorgang ermöglicht.

Dieses Ziel wird erfindungsgemäß mit einer Vorrichtung gemäß Anspruch 1 erreicht. Vorteilhafte Ausführungsformen ergeben sich aus den Unteransprüchen.

Erfindungsgemäß ist vorgesehen, dass wenigstens eine Wandung der ersten und/oder der zweiten Kammer wenigstens eine Öffnung aufweist, die durch wenigstens ein Verschlusselement, das relativ zu der Öffnung bewegbar ist, verschließbar ist und geöffnet werden kann.

Somit ist es auf einfache Art und Weise möglich, eine Kontrolle oder die Entnahme des Erntegutes und eine Kontrolle des Wurzelbereiches der Pflanzen durchzuführen. Durch die Betätigung des Verschlusselementes wird wenigstens eine Öffnung freigegeben, die je nach Position der Öffnung eine Verbindung zwischen der Außenumgebung und dem Innenraum der ersten oder zweiten Kammer herstellt. So ist es möglich, beispielsweise das Erntegut und/oder den Wurzelbereich der Pflanze zu inspizieren, ohne die Wandung abnehmen zu müssen oder die Vorrichtung in Einzelteile zu zerlegen.

In einer bevorzugten Ausführung ist die Wandung der ersten Kammer teilweise oder vollständig abnehmbar. So ist es möglich, eine umfassende Kontrolle oder ggf. Behandlung oder dergleichen des Wurzelbereiches der Pflanze vorzunehmen.

Die Relativbewegung zwischen dem Verschlusselement und der Wandung kann beispielsweise dadurch vorgenommen werden, dass die Wandung feststehend und das Verschlusselement beweglich ausgeführt ist oder umgekehrt das Verschlusselement feststehend und die Wandung beweglich ausgeführt ist.

Eine bevorzugte Ausgestaltung der Erfindung besteht darin, dass die Wandung ortsfest und das Verschlusselement beweglich angeordnet sind.

Vorzugsweise ist das Verschlusselement als Hülse oder Schieber ausgebildet, die auf der Innenseite oder auf der Außenseite der Wandung angeordnet ist, wobei die Hülse wenigstens eine Öffnung aufweist. So ist es möglich, die Hülse durch eine Drehbewegung in eine Position zu bewegen, in der die Öffnung der Hülse mit der Öffnung der Wandung fluchtet, so dass der Innenraum der Kammer von außen zugänglich ist.

Vorzugsweise ist die Hülse oder der Schieber drehbar bzw. verschiebbar ausgebildet.

Weiterhin ist es denkbar, dass die erste Trennwand und/oder die zweite Trennwand an die Hülse angrenzen. Die Hülse kann somit zwischen den beiden Trennwänden eingefasst sein. Denkbar ist es, dass die Hülse einen oder mehrere Aufnahmebereiche, wie z.B. Nuten oder einen Vorsprung etc. zur Aufnahme der ersten und/oder der zweiten Trennwand aufweist.

Weiterhin kann vorgesehen sein, dass die Vorrichtung wenigstens eine dritte Kammer aufweist, wobei sich die zweite und die dritte Kammer die zweite Trennwand teilen und wobei die Innenräume der zweiten und der dritten Kammer durch die Ausgangsöffnungen verbunden sind.

In einer Ausführungsform sind die Außenwände der dritten Kammer zumindest teilweise aus einem lichtdurchlässigen Material gefertigt. Die Außenwände umfassen alle Begrenzungsflächen der dritten Kammer bis auf die zweite Trennwand, welche vorzugsweise den Boden der dritten Kammer ausbildet.

In einer Ausführungsform weist die dritte Kammer wenigstens ein Beleuchtungsmittel auf, welches den Innenraum der dritten Kammer beleuchtet bzw. welches den Innenraum der dritten Kammer bestrahlt.

In einer weiteren Ausgestaltung der Erfindung ist in der ersten und/oder der zweiten und/oder der dritten Kammer das Raumklima gegebenenfalls individuell einstellbar.

Denkbar ist, dass eine Befeuchtungsanlage, insbesondere eine Besprenkelungsanlage oder eine Vernebelungsanlage vorgesehen ist.

Wenigstens eine der Kammern kann einen Zulauf und/oder wenigstens einen Ablauf aufweisen, durch den beispielsweise Wasser, Nebel, Nährstoffe etc. einleitbar und/oder abführbar sind.

Vorzugsweise ist die Pflanze in der Vorrichtung derart angeordnet, dass sich in der ersten Kammer die Wurzeln der Pflanze und in der zweiten Kammer das Erntegut befindet.

Um dem sich ggf. ändernden Platzbedarf der Pflanze gerecht zu werden, kann das Volumen wenigstens einer der Kammern, vorzugsweise der zweiten Kammer veränderbar sein.

Die Vorrichtung kann im Querschnitt rund, oval, eckig oder polygonal ausgebildet sein.

Weiterhin kann vorgesehen sein, dass die Wandungen der ersten Kammer nach unten hin spitz zulaufen.

Die Vorrichtung kann wenigstens eine Halterung umfassen oder mit wenigstens einer Halterung in Verbindung stehen, die die Vorrichtung insgesamt hält. Diese Halterung kann somit als Ständer dienen. Die Halterung kann so ausgebildet sein, dass in dieser genau eine Vorrichtung oder mehrere Vorrichtungen (vorzugsweise nebeneinander) aufgenommen werden können.

Die erfindungsgemäße Vorrichtung eignet sich insbesondere zur Aufzucht von Nutzpflanzen deren Erntegut unterhalb des Blätterdaches liegt, wie beispielsweise Kartoffel, Süßkartoffel, Zwiebel oder Trüffel.

Während der Aufzucht dient die erste Kammer vorzugsweise zur Aufnahme der Wurzeln der Pflanzen und die zweite Kammer vorzugsweise zur Aufnahme von Teilen der Pflanze, die das Erntegut umfassen. Jenseits, d.h. oberhalb der zweiten Kammer soll sich vorzugsweise das Blätterdach der Pflanze befinden. Die Sprossachse der Pflanze verläuft vorzugsweise von den Wurzeln in der ersten Kammer durch eine erste Verbindungsöffnung in die zweite Kammer, durchläuft diese zweite Kammer und tritt durch eine Ausgangsöffnung an die Oberfläche jenseits der zweiten Kammer.

In einer Ausführungsform sind die erste und die zweite Trennwand im Wesentlichen parallel zueinander und vorzugsweise horizontal angeordnet. Dabei bildet die erste Trennwand die untere Begrenzung der zweiten Kammer und die zweite Trennwand die obere Begrenzung der zweiten Kammer. Die erste Kammer ist vorzugsweise unterhalb der zweiten Kammer angeordnet, wobei die erste Trennwand die obere Begrenzung der ersten Kammer bildet.

In einer Ausführungsform ist die erste Kammer und/oder die zweite Kammer abgesehen von den Verbindungsöffnungen in der ersten Trennwand im Wesentlichen wasserdicht ausgeführt.

In einer Ausführungsform schwimmt die erste Trennwand auf einem Nährmedium oder Wasser, oder liegt auf einem Substrat auf, welches sich in der ersten Kammer der Position einer oder mehrerer und/oder seitlicher Wandungen befindet.

In einer weiteren Ausführungsform befindet sich in der ersten Kammer außer den Wurzeln der Pflanze nur Nebel und ggf. durch Kondensat entstandenes Wasser.

In einer Ausführungsform kann die Veränderung des Volumens der zweiten Kammer auch durch die Pflanze selbst erfolgen. Beim Wachstum der Pflanze bzw. des Erntegutes kann die zweite Trennplatte nach oben gehoben und/oder die erste Trennwand nach unten gedrückt werden.

Durch eine schrittweise oder kontinuierliche Veränderung des Volumens der zweiten Kammer, in der sich das Erntegut befindet, kann bei wachsenden Pflanzen mehr Platz für das Erntegut geschaffen werden und somit der Ertrag bei der Ernte optimiert werden.

In einer Ausführungsform weist die Vorrichtung die gleiche Anzahl an Verbindungsöffnungen und Ausgangsöffnungen auf. So kann jeder Pflanze eine Verbindungsöffnung und eine Ausgangsöffnung zugeteilt werden.

In einer Ausführungsform ist jeweils ein Paar an Verbindungsöffnungen und Ausgangsöffnungen miteinander fluchtend angeordnet. Dies ermöglicht ein gerades Wachstum der Pflanze, wobei die Sprossachse in vertikaler Richtung angezüchtet wird.

In einer Ausführungsform sind an den Verbindungsöffnungen oder im Bereich der Verbindungsöffnungen Mittel zur Fixierung eines Pflanzenteil, vorzugsweise eines Samens, eines Setzlings, einer Wurzelknolle oder dergleichen vorhanden. Diese können gegebenenfalls in die erste und/oder in die zweite Kammer hineinragen. Vorzugsweise sind diese Mittel an der Unterseite der Verbindungsöffnung angeordnet bzw. befestigt und ragen in die erste Kammer. Diese haben den Zweck, dass das betreffende Pflanzenteil unterhalb der Verbindungsöffnung in Position gehalten werden kann und dass sicherstellt wird, dass die Sprossachse durch die Verbindungsöffnung wächst. Geeignete Mittel umfassen einen Haken, eine Kralle, ein Netz, ein Gitter eine Ablagefläche und ähnliches. Oft umfassen diese Mittel auch ein Rohr und/oder einen Trichter, der sich von unten zur Verbindungsöffnung hin verjüngt.

In einer Ausführungsform ist die dritte Kammer direkt oberhalb der zweiten Kammer angeordnet, wobei die zweite Kammer die erste und die dritte Kammer voneinander beabstandet. Die erfindungsgemäße Vorrichtung nimmt eine sandwichartige Gestalt an, wobei die erste Kammer unten, die zweite Kammer in der Mitte und die dritte Kammer oben liegt.

In einer Ausführungsform ist die dritte Kammer voluminös, beispielsweise in Form einer Glocke ausgebildet, um genügend Platz für das Blätterdach der Pflanze zu bieten. So wird sichergestellt, dass das Blätterdach der Pflanze genügend Licht erhält. In der Ausführungsform, in der die erfindungsgemäße Vorrichtung drei Kammern umfasst stellt die erfindungsgemäße Vorrichtung eine Art Minigewächshaus dar, wobei die Gesamtheit der Pflanze im Wesentlichen innerhalb von den drei Kompartimenten angeordnet ist und somit klimatisch von der Umgebung abgeschottet wird.

In einer Ausführungsform weist die erste und/oder die zweite und/oder die dritte Kammer ein oder mehrere Mittel zur Ermittlung des Raumklimas auf. Geeignete Mittel umfassen Temperaturfühler oder einem Luftfeuchtigkeitsfühler.

Diese Mittel werden in einer Ausführungsform von einer zentralen Steuereinheit gesteuert. Diese Steuereinheit bezieht vorzugsweise Messgrößen von Messfühlern in der Kammer und stellt die Steuerungsmittel entsprechend ein, um eine Zielgröße zu erreichen.

So herrscht in jeder der Kammern ein bestimmtes Mikroklima. Durch eine entsprechende Optimierung der Klimata kann das Wachstum der Pflanzen und den Ernteertrag je nach Pflanzenart optimiert werden.

In einer Ausführungsform befindet sich in der ersten und/oder der zweiten und/oder dritten Kammer eine Vorrichtung zum Besprühen der jeweiligen Kammer mit Wasser, Einbringen von Nebel oder einer Nährstofflösung. Insbesondere kann vorgesehen sein, dass in der ersten Kammer ein Zerstäuber vorhanden ist, welcher mit einer Nährstofflösung versorgt wird. So kann die erste Kammer mit einem nährstoffhaltigen Nebel ein gefüllt werden. Die erfindungsgemäße Vorrichtung eignet sich in dieser Ausführungsform für einen aeroponischen Anbau von Pflanzen.

In einer Ausführungsform weist die erste und/oder die zweite und/oder die dritte Kammer einer erfindungsgemäßen Vorrichtung einen Zulauf und/oder eine Ablauf auf. Durch den Zulauf bzw. die Zulaufleitung kann Wasser, eine Nährstofflösung, nährstoffreiche feuchte Luft, Nährstoffnebel oder auch Frischluft in die erste Kammern eingebracht werden. Durch den Zulauf bzw. die Zulaufleitung kann verbrauchtes Wasser oder verbrauchte Luft abgeführt werden. Vorzugsweise weist die erste Kammer einen Zulauf und einen Ablauf auf. Zudem ist es möglich, dass auch die zweite und/oder die dritte Kammer einen Zulauf und/oder Ablauf besitzt, um das Raumklima nicht individuell an der Vorrichtung einstellen zu müssen sondern Luft mit entsprechender Temperatur und Luftfeuchtigkeit gesammelt an mehrere erfindungsgemäße Vorrichtungen leiten zu können. Ferner können diese Zu- und Ableitungen der Durchlüftung der jeweiligen Kammern dienen.

Weitere Einzelheiten und Vorteile der Erfindung ergeben sich aus den nachfolgenden Ausführungsbeispielen.

In den Figuren zeigen:
- Figuren 1:: eine Explosionsdarstellung der erfindungsgemäßen Vorrichtung,
- Figur 2:: eine perspektivische Darstellung der Vorrichtung mit abgenommener Wandung der ersten Kammer,
- Figur 3:: eine perspektivische Darstellung der Vorrichtung im zusammengesetzten Zustand,
- Figur 4:: eine weitere perspektivische Darstellung der Vorrichtung im zusammengesetzten Zustand,
- Figur 5:: eine perspektivische Darstellung einer Anordnung einer Mehrzahl von Vorrichtungen in einer Halterung und
- Figur 6:: eine perspektivische Darstellung einer Anordnung einer Vorrichtung in einer Halterung.

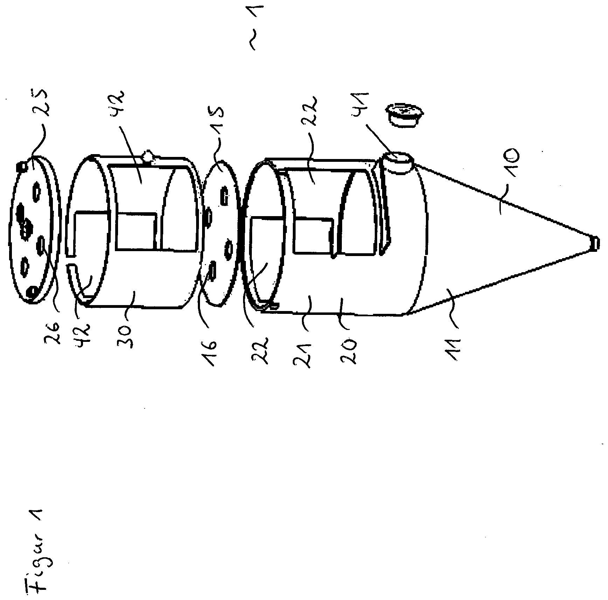

Figur 1 zeigt eine Explosionsansicht einer erfindungsgemäßen Vorrichtung 1.

Die Vorrichtung gemäß Figur 1 weist eine erste Kammer 10 und eine zweite Kammer 20 auf.

Zwischen der ersten Kammer 10 und der zweiten Kammer 20 befindet sich eine erste Trennwand 15. Oberhalb der zweiten Kammer 20 befindet sich eine zweite Trennwand 25.

Die erste Kammer 10 wird durch die erste Trennwand 15 als Deckfläche sowie die umlaufende Wandung 11 begrenzt, die wie aus Figur 1 ersichtlich nach unten hin spitz zuläuft. Die erste Kammer 10 ist vollumfänglich durch stabile Wandungen 11 begrenzt. Diese können beispielsweise aus Metall oder einem vorzugsweise steifen Plastik gefertigt sein.

Die zweite Kammer 20 wird durch die zweite Trennwand 25 als Deckfläche, durch die erste Trennwand 15 als Boden sowie die durch die umlaufende Wandung 21 bzw. die Hülse 30 begrenzt, die in dem durch die Wandung 21 begrenzten Bereich aufgenommen ist und die zwei gegenüberliegende Öffnungen 42 aufweist.

Auch die Wandung 21 der zweiten Kammer 20 kann stabil ausgeführt sein und beispielsweise aus Plastik bestehen.

Innerhalb der ersten Trennwand 15 befinden sich Verbindungsöffnungen 16, die die Innenräume der ersten Kammer 10 und der zweiten Kammer 20 miteinander verbinden. Innerhalb der zweiten Trennwand 25 befinden Ausgangsöffnungen 26, die die zweite Kammer mit der Umgebung oberhalb der Vorrichtung verbindet.

Die erste Trennwand 15 und die zweite Trennwand 25 sind parallel zueinander angeordnet. Sie können ebenfalls aus Plastik oder aus Metall bestehen.

Die Vorrichtung weist eine Vielzahl von Verbindungsöffnungen 16 und Ausgangsöffnungen 26 auf, wobei die Gesamtzahl an Verbindungsöffnungen und Ausgangsöffnungen einander entspricht. Einer Verbindungsöffnung 16 ist jeweils eine Ausgangsöffnung 26 zugeordnet, welche miteinander fluchtet.

An den Verbindungsöffnungen 16 sind Mittel zur Fixierung eines Samens bzw. Setzlings angebracht. An den Ausgangsöffnungen 26 sind Mittel zur Führung der Sprossachse angebracht.

Die Vorrichtung weist eine Zulaufleitung 41 für Nebel und eine Zulaufleitung für Wasser auf. Durch die Zulaufleitung 41 kann grundsätzlich Wasser und/oder Nebel und/oder eine Nährstofflösung in die erste Kammer 10 und/oder in die zweite Kammer 20 eingebracht oder aus diesen abgeführt werden.

Die erste Kammer 10 kann mit einem anorganischen Substrat gefüllt, wie beispielsweise mit körnigem, granuliertem Blähton oder auch als Leerraum ausgeführt sein, in dem sich im Wesentlichen außer Nebel bzw. Nährstoffen nur die Wurzeln der Pflanze befinden.

Die Wurzeln dieser Pflanzen befinden sich innerhalb der ersten Kammer 10, ein Abschnitt der Sprossachse samt Erntegut befindet sich in der zweiten Kammer 20, und das Blätterdach befindet sich oberhalb der Vorrichtung. Die Sprossachse, welche sich von den Wurzeln über die Ertragsfrüchte, wie beispielsweise Kartoffeln zum Blätterdach erstreckt durchläuft eine Verbindungsöffnung 16 sowie eine Ausgangsöffnung 26, wobei die jeweiligen Öffnungen miteinander fluchten.

Im Zuge einer Aufzucht wird ein keimfähiges Pflanzenteil an einem Fixierungsmittel im Bereich einer Verbindungsöffnung 16 angebracht. In dieser Phase befindet sich die zweite Trennwand 25 sehr nahe an der ersten Trennwand 15, so dass die trichterförmigen Mittel zur Führung der Sprossachse praktisch an den Verbindungsöffnungen 16 anliegen. Der sprießende Spross durchdringt eine Verbindungsöffnung 16 und zugleich auch eine Ausgangsöffnung 26. Die sich bildenden Wurzeln werden in der ersten Kammer 10 mit den notwendigen Nährstoffen versorgt.

Wenn der Setzling eine bestimmte Größe erreicht hat, und die Blätterkrone einen ausreichenden Überstand über der zweiten Trennwand 25 besitzt, wird diese zweite Trennwand angehoben und somit das Volumen der zweiten Kammer und der Abstand zwischen der ersten Trennwand 15 und der zweiten Trennwand 25 vergrößert. Dies kann auch durch die Kraft der Pflanze geschehen.

In der zweiten Kammer 20 entsteht ein Abschnitt entlang der Sprossachse, welcher sowohl von den Wurzeln als auch von der Blätterkrone abgetrennt ist. Daran bildet sich im weiteren Verlauf das Erntegut. Das Klima und die Luftfeuchtigkeit innerhalb der zweiten Kammer wird derart beeinflusst, dass ein optimales Wachstum des Erntegutes gewährleistet wird.

Wie dies weiter aus Figur 1 hervorgeht, befinden sich in der Wandung 21 der zweiten Kammer 20 ebenfalls gegenüberliegende Öffnungen 22.

Die beispielsweise aus Plastik oder Metall bestehende Hülse 30 ist drehbar in der zweiten Kammer 20 aufgenommen. Sie liegt unmittelbar an der Wandung 21 an oder ist von dieser beabstandet.

Die Drehung der Hülse 30 kann händisch erfolgen oder es kann ein Antriebsmittel vorgesehen sein, dass die Drehung der Hülse auf Anforderung veranlasst. Wie dies aus Figur 1 ersichtlich ist, ist der Innenraum der zweiten Kammer 20 zur Umgebung hin verschlossen, wenn die Öffnungen 42 der Hülse 30 sich nicht mit den Öffnungen 22 der Wandung 21 decken und von außen zugänglich, wenn eine solche Deckung vorliegt.

Somit ist es durch eine Drehung der Hülse 30 auf einfache Art und Weise möglich, Zugang zu der zweiten Kammer 20 zu erhalten, beispielsweise um das Erntegut zu ernten oder zu inspizieren.

In Figur 1 sind die Öffnungen 22, 42 so angeordnet, dass sie die zweite Kammer 20 mit der Außenumgebung verbinden können. Alternativ oder zusätzlich ist eine entsprechend Anordnung von Öffnungen auch für die erste Kammer 10 denkbar und von der Erfindung mit umfasst.

Die Hülse 30 kann sich nur im Bereich der zweiten Kammer 20 befinden oder nur im Bereich der ersten Kammer 10 oder sich über beide Kammern 10, 20 erstrecken, so dass durch eine Drehung der Hülse eine oder mehrere Öffnungen nur einer oder beider Kammern geöffnet oder geschlossen werden.

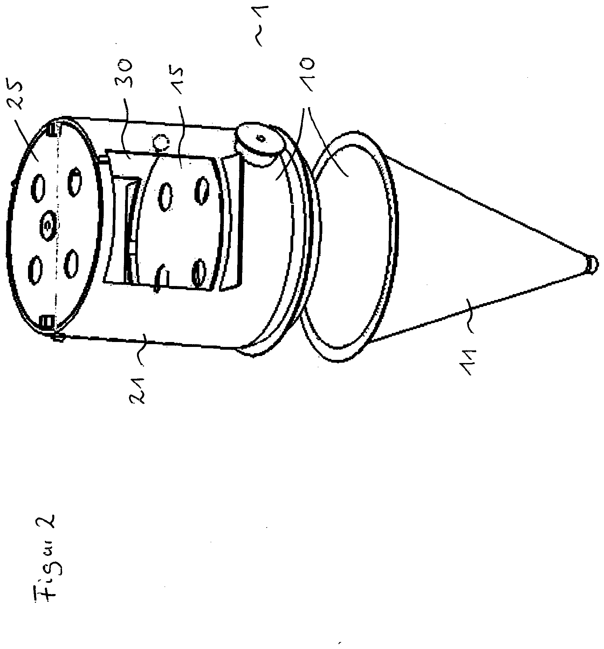

Figur 2 zeigt eine perspektivischen Ansicht der Vorrichtung und verdeutlicht, dass die Wandung 11 von dem Rest der Vorrichtung abnehmbar ist. Dadurch ist es möglich, den Wurzelbereich der Pflanze zu überprüfen.

Wie dies aus Figur 2 ersichtlich ist, erstreckt sich die erste Kammer 10 in dem von der Wandung 11 umgebenen Bereich bis hin zu der Trennplatte 15.

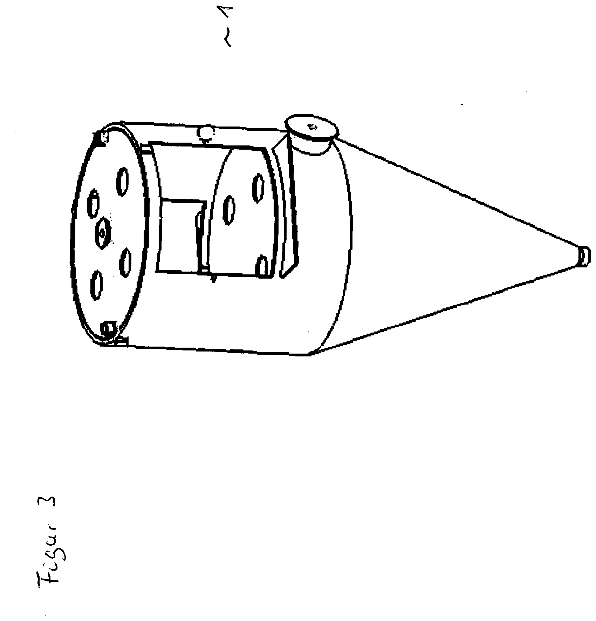

Figur 3 zeigt eine perspektivische Ansicht der Vorrichtung im zusammengesetzten Zustand.

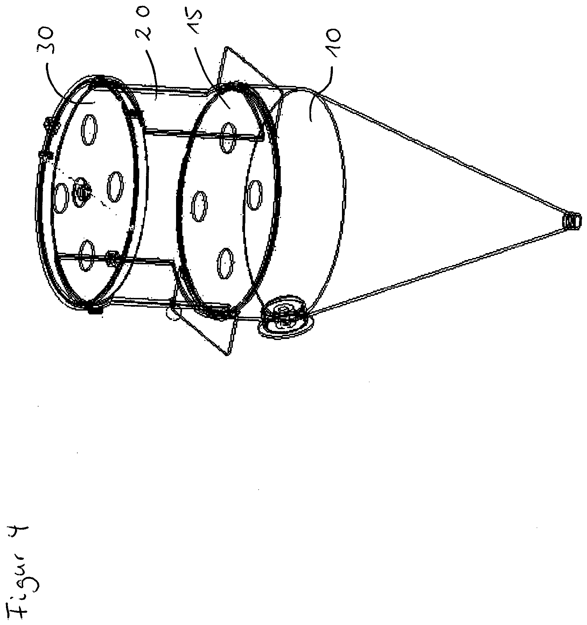

Figur 4 zeigt eine die Vorrichtung in einer Ansicht, in der auch die an sich verdeckten Wandungen dargestellt sind. Aus dieser Ansicht wird deutlich, dass die Hülse 30 an der Innenseite der Wandung 21 entlang angeordnet ist und relativ zu dieser drehbar ist. Ferner wird aus der Ansicht gemäß Figur 4 deutlich, dass sich die erste Kammer 10 sowohl in dem spitz zulaufenden Bereich als auch in dem sich darüber anschließenden Bereich bis hin zu der Platte 15 erstreckt.

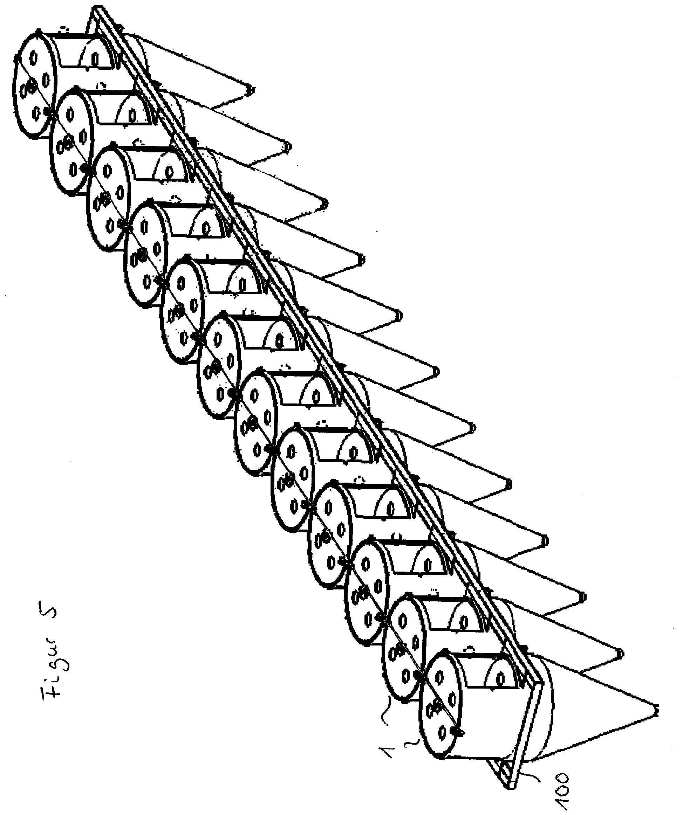

Figur 5 zeigt eine Anordnung von mehreren, nebeneinander angeordneten Vorrichtungen, die in einer gemeinsamen Halterung 100 aufgenommen sind, in die sie von oben eingesetzt werden. Werden die einzelnen Zuleitungen und Abläufe der einzelnen Vorrichtungen mit einer oder mehreren zentralen Leitungen verbunden, ist es möglich, beispielsweise durch eine nicht dargestellte Versorgungsleitung eine Mehrzahl der Vorrichtungen mit Nebel, Wasser, Nährstoffen etc. zu versorgen.

Auch ist es möglich, die Vorrichtungen 1 so miteinander mechanisch oder elektrisch zu verbinden, dass sämtliche Hülsen der Vorrichtungen zeitgleich gedreht werden, so dass die Öffnungen zeitgleich geöffnet und/oder geschlossen werden.

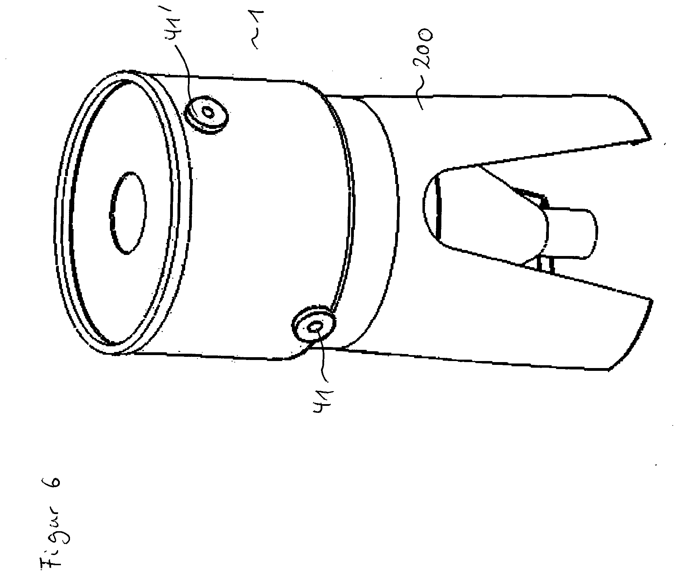

Aus Figur 6 ist eine Halterung 200 ersichtlich, in der eine einzige Vorrichtung 1 nach dem Einsetzen von oben aufgenommen ist. Diese Halterung 200 weist eine zentrale Ausnehmung auf, auf der ein überstehender Abschnitt der Vorrichtung aufliegt.

Aus Figur 6 ist ferner nicht nur der Zulauf 41 für die erste Kammer 10, sondern auch der Zulauf 41' für die zweite Kammer 20 ersichtlich. Vorzugsweise wird im Betrieb der Vorrichtung durch den Zulauf 41 Nebel und durch den Zulauf 41' Wasser eingeleitet.

Grundsätzlich ist es denkbar, die Zuläufe auch als Abläufe für verbrauchtes Wasser, Abluft etc. zu verwenden. Auch ist es denkbar, dass die erste und/oder die zweite Kammer sowohl einen Zulauf als auch einen Ablauf aufweist.

## Patentansprüche

1. Vorrichtung (1) zur Aufzucht einer oder mehrerer Pflanzen, wobei die Vorrichtung (1) wenigstens eine erste und wenigstens eine zweite Kammer (10; 20) aufweist, die durch eine erste Trennwand (15) voneinander abgetrennt sind, wobei die Innenräume der ersten und der zweiten Kammer (10; 20) durch eine oder mehrere Wandungen (11; 21) begrenzt sind und durch eine oder mehrere Verbindungsöffnungen (16) in der ersten Trennwand (15) verbunden sind, und wobei die zweite Kammer (20) eine oder mehrere Ausgangsöffnungen (26) aufweist, die an einer zweiten Trennwand (25) angeordnet sind, **dadurch gekennzeichnet, dass** wenigstens eine Wandung (11; 21) der ersten und/oder der zweiten Kammer (10; 20) wenigstens eine Öffnung (22) aufweist, die durch wenigstens ein Verschlusselement, das relativ zu der Öffnung (22) bewegbar ist, verschließbar ist und geöffnet werden kann.

2. Vorrichtung (1) nach Anspruch 1, **dadurch gekennzeichnet, dass** die Wandung (11) der ersten Kammer (10) teilweise oder vollständig abnehmbar ist.

3. Vorrichtung (1) nach einem der vorhergehenden Ansprüche, **dadurch gekennzeichnet, dass** die Wandung (11; 21) feststehend und das Verschlusselement beweglich ausgeführt ist oder umgekehrt das Verschlusselement feststehend und die Wandung (11; 21) beweglich ausgeführt ist.

4. Vorrichtung (1) nach einem der vorangehenden Ansprüche, **dadurch gekennzeichnet, dass** das Verschlusselement als Hülse (30) oder Schieber angeordnet ist, die auf der Innenseite oder auf der Außenseite der Wandung (11; 21) angeordnet ist, wobei die Hülse (30) wenigstens eine Öffnung (42) aufweist.

5. Vorrichtung (1) nach Anspruch 4, **dadurch gekennzeichnet, dass** die Hülse (30) oder der Schieber drehbar bzw. verschiebbar ausgebildet ist.

6. Vorrichtung (1) nach Anspruch 4 oder 5, **dadurch gekennzeichnet, dass** die erste Trennwand (15) und/oder die zweite Trennwand (25) an die Hülse (30) oben und/oder unten angrenzen.

7. Vorrichtung (1) nach einem der vorangehenden Ansprüche, **dadurch gekennzeichnet, dass** die Vorrichtung (1) wenigstens eine dritte Kammer aufweist, wobei sich die zweite (20) und die dritte Kammer die zweite Trennwand (25) teilen und wobei die Innenräume der zweiten (20) und der dritten Kammer durch die Ausgangsöffnungen (26) verbunden sind.

8. Vorrichtung (1) nach Anspruch 7, **dadurch gekennzeichnet, dass** die Begrenzung der dritten Kammer zumindest teilweise durch ein lichtdurchlässiges Material gebildet wird und/oder wobei in der dritten Kammer wenigstens ein Beleuchtungsmittel angebracht ist.

9. Vorrichtung (1) nach einem der vorangehenden Ansprüche, **dadurch gekennzeichnet, dass** in der ersten (10) und/oder der zweiten (20) und/oder der dritten Kammer das Raumklima individuell einstellbar ist und/oder eine Befeuchtungsanlage, insbesondere eine Besprenkelungsanlage oder eine Vernebelungsanlage vorgesehen ist und/oder wenigstens einen Zulauf und/oder wenigstens einen Ablauf vorgesehen ist.

10. Vorrichtung (1) nach einem der vorangehenden Ansprüche, **dadurch gekennzeichnet, dass** sich in der ersten Kammer (10) die Wurzeln der Pflanze und in der zweiten Kammer (20) das Erntegut befindet.

11. Vorrichtung (1) nach einem der vorangehenden Ansprüche, **dadurch gekennzeichnet, dass** das Volumen wenigstens einer der Kammern, vorzugsweise der zweiten Kammer (20) veränderbar ist.

12. Vorrichtung (1) nach einem der vorangehenden Ansprüche, **dadurch gekennzeichnet, dass** die Vorrichtung (1) im Querschnitt rund, oval, eckig oder polygonal ist.

13. Vorrichtung (1) nach einem der vorangehenden Ansprüche, **dadurch gekennzeichnet, dass** die Wandungen (11) der ersten Kammer wenigstens abschnittsweise spitz zulaufen.

14. Vorrichtung (1) nach einem der vorangehenden Ansprüche, **dadurch gekennzeichnet, dass** die Vorrichtung (1) wenigstens eine Ständer umfasst oder mit wenigstens einer Halterung (100, 200) in Verbindung steht.

## Claims

1. A device (1) for growing one or more plants, wherein the device (1) comprises at least one first and at least one second chamber (10; 20), which are separated from one another by a first dividing wall (15), wherein the interior spaces of the first and the second chamber (10; 20) are delimited by one or more walls (11; 21) and are connected by one or more connecting openings (16) in the first dividing wall (15), and wherein the second chamber (20) comprises one or more outlet openings (26), which are arranged on a second dividing wall (25), **characterized in that** at least one wall (11; 21) of the first and/or second chamber (10; 20) comprises at least one opening (22) which can be closed and opened by at least one closure element, which can be moved relative to the opening (22).

2. The device (1) according to claim 1, **characterized in that** the wall (11) of the first chamber (10) is partly or completely removable.

3. The device (1) according to one of the preceding claims, **characterized in that** the wall (11; 21) is designed to be fixed and the closure element movable or conversely the closure element is designed to be fixed and the wall (11; 21) movable.

4. The device (1) according to one of the preceding claims, **characterized in that** the closure element is arranged as a sleeve (30) or slider, which is arranged on the inside or on the outside of the wall (11; 21), wherein the sleeve (30) comprises at least one opening (42).

5. The device (1) according to claim 4, **characterized in that** the sleeve (30) or slider is designed to be rotatable or slidable.

6. The device (1) according to claim 4 or 5, **characterized in that** the first dividing wall (15) and/or the second dividing wall (25) border(s) the sleeve (30) at the top and/or bottom.

7. The device (1) according to one of the preceding claims, **characterized in that** the device (1) comprises at least one third chamber, wherein the second (20) and third chambers share the second dividing wall (25) and wherein the interior spaces of the second (20) and third chambers are connected by the outlet openings (26).

8. The device (1) according to claim 7, **characterized in that** the boundary of the third chamber is at least partly formed by a light-transmitting material and/or wherein at least one illuminating means is mounted in the third chamber.

9. The device (1) according to one of the preceding claims, **characterized in that** in the first (10) and/or the second (20) and/or the third chamber the interior climate can be individually adjusted and/or a humidifying system, in particular a sprinkling system or a misting system, is provided and/or at least one inlet and/or at least one outlet is provided.

10. The device (1) according to one of the preceding claims, **characterized in that** in the first chamber (10) the roots of the plant are located and in the second chamber (20) the crop is located.

11. The device (1) according to one of the preceding claims, **characterized in that** the volume of at least one of the chambers, preferably the second chamber (20), is variable.

12. The device (1) according to one of the preceding claims, **characterized in that** the device (1) comprises a round, oval, angular or polygonal cross-section.

13. The device (1) according to one of the preceding claims, **characterized in that** the walls (11) of the first chamber taper at least in some sections.

14. The device (1) according to one of the preceding claims, **characterized in that** the device (1) comprises at least one stand or is connected to at least one holder (100, 200).

## Revendications

1. Dispositif (1) pour la culture de une ou plusieurs plantes, le dispositif (1) présentant au moins un premier compartiment et au moins un deuxième compartiment (10 ; 20) qui sont séparés l'un de l'autre par une première paroi de séparation (15), les espaces intérieurs du premier et deuxième compartiments (10 ; 20) étant délimités par une ou plusieurs parois (11 ; 21) et reliés par une ou plusieurs ouvertures de communication (16) dans la première paroi de séparation (15), et le deuxième compartiment (20) comportant une ou plusieurs ouvertures de sortie (26) qui sont agencés au niveau d'une deuxième paroi de séparation (25), **caractérisé en ce que** au moins une paroi (11 ; 21) du premier et/ou du deuxième compartiment (10 ; 20) comporte au moins une ouverture (22) qui peut être fermée et ouverte par au moins un élément de fermeture mouvable par rapport à l'ouverture (22).

2. Dispositif (1) selon la revendication 1, **caractérisé en ce que** la paroi (11) du premier compartiment (10) est partiellement ou entièrement détachable.

3. Dispositif (1) selon l'une quelconque des revendications précédentes, **caractérisé en ce que** la paroi (11 ; 21) est conçue de manière fixe et l'élément de fermeture est conçu de manière mouvable ou inversement, l'élément de fermeture est conçu de manière fixe et la paroi (11 ; 21) est conçue de manière mouvable.

4. Dispositif (1) selon l'une quelconque des revendications précédentes, **caractérisé en ce que** l'élément de fermeture est agencé sous forme de manchon (30) ou coulisseau, lequel manchon est placé sur le côté intérieure ou sur le côté extérieur de la paroi (11 ; 21), le manchon (30) comprenant au moins une ouverture (42).

5. Dispositif (1) selon la revendication 4, **caractérisé en ce que** le manchon (30) ou le coulisseau est réalisé de manière à pouvant tourner ou de manière à pouvant coulisser.

6. Dispositif (1) selon l'une quelconque des revendications 4 ou 5, **caractérisé en ce que** la première paroi de séparation (15) et/ou la deuxième paroi de séparation (25) sont adjacentes au manchon (30) en haut et/ou en bas.

7. Dispositif (1) selon l'une quelconque des revendications précédentes, **caractérisé en ce que** le dispositif (1) comprend au moins un troisième compartiment, le deuxième (20) et le troisième compartiments se partageant la deuxième paroi de séparation (25) et les espaces intérieurs du deuxième (20) et du troisième compartiments étant reliés par les orifices de sortie (26).

8. Dispositif (1) selon la revendication 7, **caractérisé en ce que** la délimitation du troisième compartiment est formée au moins en partie par un matériau transmissive à la lumière et/ou au moins un moyen d'éclairage étant attaché dans le troisième compartiment.

9. Dispositif (1) selon l'une quelconque des revendications précédentes, **caractérisé en ce que** le climat ambiant est réglable individuellement dans le premier (10) et/ou dans le deuxième (20) et/ou dans le troisième compartiment et/ou un système humidificateur, en particulier un système d'aspersion d'eau ou de brumisation, est prévu et/ou au moins une admission et un/ou au moins une sortie est prévue.

10. Dispositif (1) selon l'une quelconque des revendications précédentes, **caractérisé en ce que** les racines de la plante se trouvent dans le premier compartiment (10) et la récolte se trouve dans le deuxième compartiment (20).

11. Dispositif (1) selon l'une quelconque des revendications précédentes, **caractérisé en ce que** le volume d'au moins l'un des compartiments, de préférence du deuxième compartiment (20), peut être modifié.

12. Dispositif (1) selon l'une quelconque des revendications précédentes, **caractérisé en ce que** le dispositif (1) a une section transversale ronde, ovale, angulaire ou polygonale.

13. Dispositif (1) selon l'une quelconque des revendications précédentes, **caractérisé en ce que** les parois (11) du premier compartiment se terminent en pointe au moins en sections.

14. Dispositif (1) selon l'une quelconque des revendications précédentes, **caractérisé en ce que** le dispositif (1) comprend au moins un support ou est en contact avec au moins une fixation (100, 200).
